# EUROPÄISCHE PATENTSCHRIFT

(11) **EP 1 316 932 B1**
(45) Veröffentlichungstag und Bekanntmachung des Hinweises auf die Patenterteilung: **03.08.2005**
(21) Anmeldenummer: 02023839.0
(22) Anmeldetag: 24.10.2002
(51) Int. Cl.: G08B 13/19

(54) **Passiv-Infrarot-Bewegungsmelder**
Passive infrared motion detector
Capteur passif de mouvement à rayons infrarouges

(30) Priorität: 23.11.2001 DE 10157530
(43) Veröffentlichungstag der Anmeldung: 04.06.2003
(73) Patentinhaber: Insta Elektro GmbH, 58511 Lüdenscheid (DE)
(72) Erfinder: Wehlmann, Friedhelm, Dipl.-Ing., Dipl.-Wirt.-Ing., 45730 Oer-Erkenschwick (DE); Holtz, Friedhelm, Dipl.-Ing., 58511 Lüdenscheid (DE); Kohlhaas, Johannes, 58579 Schalksmühle (DE)

(56) Entgegenhaltungen:
- WO-A-99/53278
- DE-A- 4 236 618

## Beschreibung

Die vorliegende Erfindung geht von einem gemäß dem Oberbegriff des Hauptanspruches konzipierten Passiv-Infrarot-Bewegungsmelder aus.

Derartige Passiv-Infrarot-Bewegungsmelder werden zur Überwachung eingesetzt um z. B. die Anwesenheit von Menschen im Erfassungsbereich festzustellen, welche Wärme in Form von Infrarotstrahlung abgeben. Solche Bewegungsmelder haben üblicherweise einen Signalgeber der Schaltsignale abgibt um z. B. eine Lichtquelle, eine Warnanlage usw. einzuschalten. Um eine Lichtquelle erst bei Dämmerung bzw. bei Dunkelheit zuverlässig einzuschalten, sind solche Passiv-Infrarot-Bewegungsmelder üblicherweise mit einem Sensorelement zur Erfassung der Umgebungshelligkeit ausgestattet.

Durch die DE 298 17 816 U1 ist ein dem Oberbegriff des Hauptanspruches entsprechender Passiv-Infrarot-Bewegungsmelder bekannt geworden. Von den beiden Sensoren eines solchen Passiv-Infrarot-Bewegungsmelders wird sowohl die Wärme bzw. Infrarotstrahlung als auch die Umgebungshelligkeit erfasst und von der Schaltungsanordnung gegebenenfalls zur Erzeugung eines Schaltsignals herangezogen. Da die Sensoren solcher Geräte neben den gewünschten Signalen auch Störsignale aus der Umgebung ihres Einsatzortes aufnehmen, ist es oftmals erforderlich die Parameter des Gerätes den Umgebungsbedingungen anzupassen, um einen weitestgehend zuverlässigen bzw. störungsfreien Betrieb sicher zu stellen. Üblicherweise werden die dazu notwendigen Einstellvorgänge mittels entsprechender, direkt am Passiv-Infrarot-Bewegungsmelder vorhandener mechanischer Bedienelemente vorgenommen. Solche mechanischen Bedienelemente sind jedoch nicht nur teuer, sondern benötigen darüber hinaus für ihre Unterbringung auch einen entsprechenden Bauraum, der nicht immer zur Verfügung steht.

Ausgehend von einer solchen Ausgestaltung liegt der vorliegenden Erfindung die Aufgabe zugrunde, einen Passiv-Infrarot-Bewegungsmelder zu schaffen, bei welchem die zur ordnungsgemäßen Funktion notwendige Einstellung physikalischer Parameter durch Einlernvorgänge, ohne die Verwendung von mechanischen Bedienelementen zuverlässig durchführbar sind.

Erfindungsgemäß wird diese Aufgabe durch die im kennzeichnenden Teil des Hauptanspruches angegebenen Merkmale gelöst.

Besonders vorteilhaft bei einer derartigen Ausgestaltung ist, dass auf einfache Art und Weise allein durch die abgestimmte Bewertung des entsprechenden Signalverlaufes des vom die Infrarotstrahlung erfassenden ersten Sensorelementes und des entsprechenden Signalverlaufes des vom die Umgebungshelligkeit erfassenden zweiten Sensorelementes in der Lernstufe, Einlernvorgänge von physikalischen Parameter bei gleichzeitiger zuverlässiger Unterdrückung von Störeffekten während des Betriebes bzw. direkt nach der Installation am Einbauort schnell und einfach durch gezieltes mehrmaliges Abdunkeln durchführbar sind.

Weitere vorteilhafte Ausgestaltungen des erfindungsgemäßen Gegenstandes sind in den Unteransprüchen angegeben. Anhand eines Ausführungsbeispieles sei die Erfindung näher erläutert. Dabei zeigt:
- Fig. 1:: prinziphaft ein Blockschaltbild der wesentlichen Merkmale des erfindungsgemäßen Gegenstandes;
- Fig. 2:: ein Ablaufdiagramm eines Einlernvorganges physikalischen Parametern;

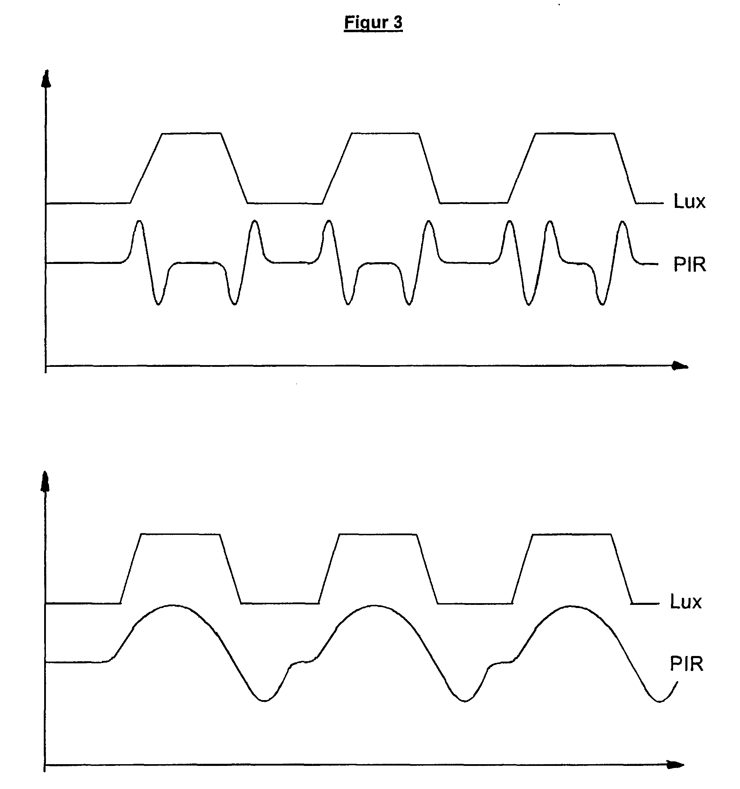

- Fig. 3:: ein Diagramm typischer Verläufe von Ausgangssignalen des ersten und des zweiten Sensorelementes.

Wie aus den Figuren hervorgeht, ist ein solcher Passiv-Infrarot-Bewegungsmelder mit einer Leiterplatte 1 versehen, auf welcher im wesentlichen ein erstes Sensorelement 2 zur Feststellung von Infrarotstrahlung, ein zweites Sensorelement 3 zur Feststellung der Umgebungshelligkeit sowie eine der Einfachheit halber nicht in allen Einzelheiten dargestellte, einen Mikrocontroller beinhaltende, zur Auswertung der von den beiden Sensorelementen 2, 3 abgegebenen Signale notwendige Schaltungsanordnung und des weiteren ein zur Beeinflussung der anzusteuernden Last vorgesehenen Schaltsignalgeber 9 vorhanden sind.

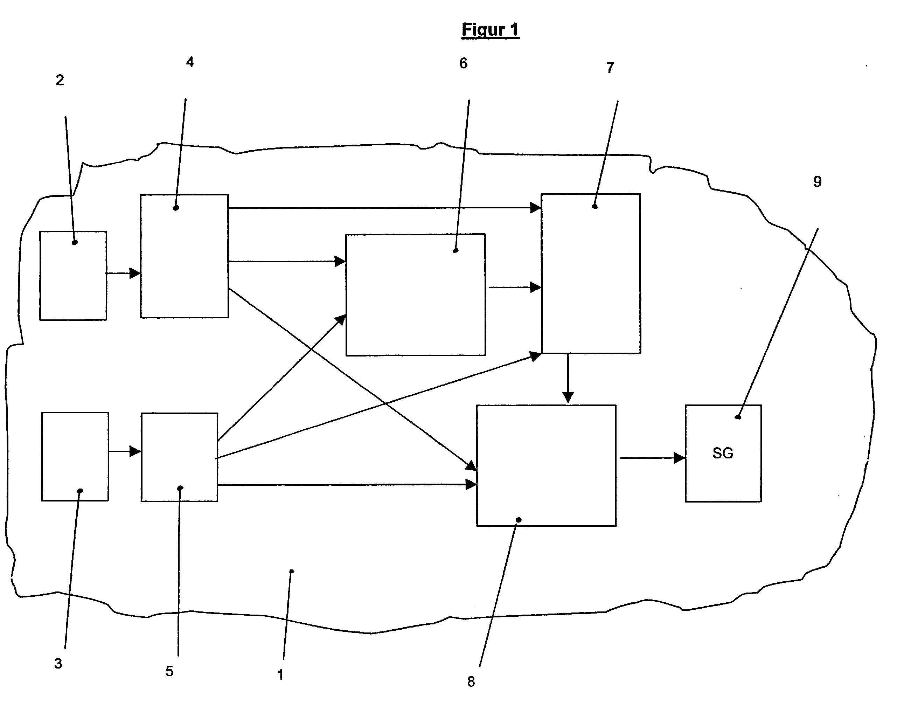

Wie des weiteren insbesondere aus Fig. 1 hervorgeht, wird das Ausgangssignal PIR des ersten Sensorelementes 2 einem ersten Analogdigitalwandler 4 und das Ausgangssignal LUX des zweiten Sensorelementes 3 einem zweiten Analogdigitalwandler 5 zugeführt. Ausgangsseitig werden die digitalisierten Signale der beiden Analogdigitalwandler 4, 5 jeweils in ein erstes Verknüpfungsmodul 6 und ein zweites Verknüpfungsmodul 8 eingespeist. Ausgangsseitig steht das erstes Verknüpfungsmodul 6 mit einer Lernstufe 7 in Verbindung, welche eingangsseitig zudem mit den beiden Analogdigitalwandler 4, 5 in Verbindung steht. Ausgangsseitig ist die Lernstufe 7 datentechnisch mit dem zweiten Verknüpfungsmodul 8 verbunden, welches wiederum ausgangsseitig mit dem Schaltsignalgeber 9 in Verbindung steht. Sowohl die beiden Analogdigitalwandler 4, 5 als auch die beiden Verknüpfungsmodule 6, 8 und die Lernstufe 7 sind auf der Leiterplatte 1 des Passiv-Infrarot-Bewegungsmelders angeordnet. Zum einfachen Einlernen von physikalischen Parametern, wie z. B. der vorliegenden Umgebungshelligkeit, der vorliegenden Umgebungstemperatur usw., ist die Lernstufe 7 vorgesehen. Ein gezieltes Abdunkeln des Passiv-Infrarot-Bewegungsmelders wird erkannt wenn z. B. innerhalb einer Zeitspanne von 3 Sekunden drei mal eine Abdunkelung vorgenommen wurde. Dies ist der Startpunkt für einen Einlernvorgang von physikalischen Parametern, wie Z. B. Umgebungshelligkeit, Umgebungstemperatur usw. Ein solcher gezielter mehrmaliger Abdunkelungsvorgang kann auf einfache Art und Weise mittels der Hand des Benutzers vorgenommen werden.

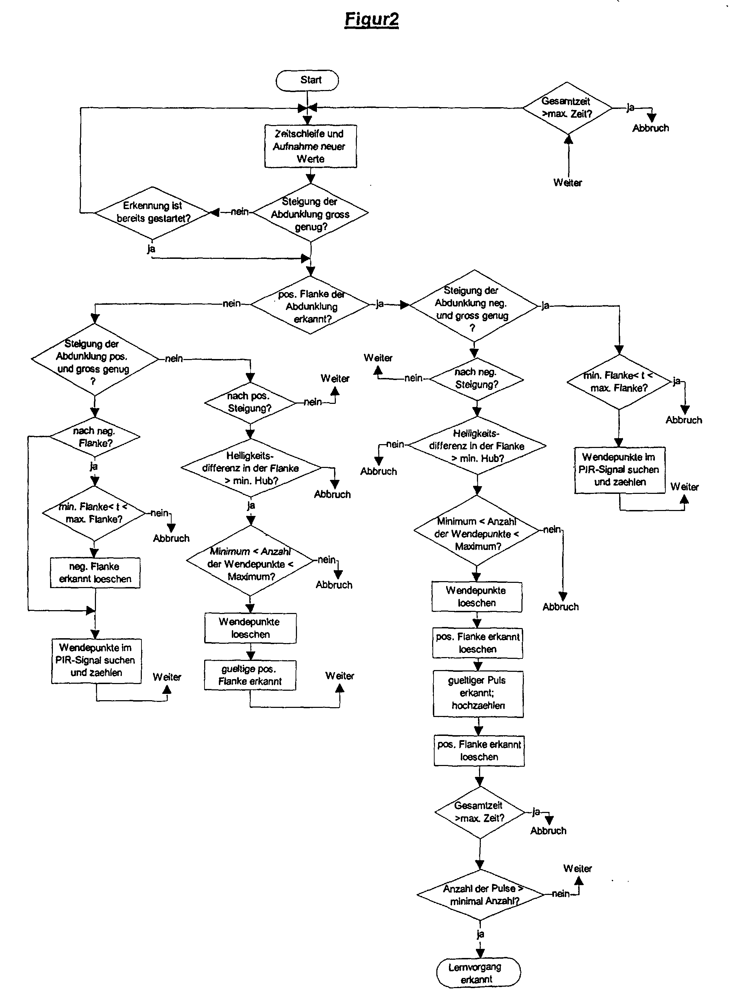

In Figur 2 ist der prinzipielle Ablauf des Vorgangs in der ersten Verknüpfungsstufe 6 dargestellt. Der Vorgang läuft in einer Endlosschleife, in der bei jedem Durchlauf neue Werte verarbeitet werden, die entweder durch Erkennen eines Einlernvorganges bzw. dessen Start in der Lernstufe 7 Verwendung finden oder durch Verletzung eines der begrenzenden Kriterien verworfen werden. In diesem Diagramm wird bei Signaländerungen im Ausgangssignal LUX des zweiten Sensorelementes 3 von Wert, von Steigung und ab dem Zeitpunkt der Änderung der Richtung der Steigung bzw. ihrem Absinken unter einen Mindestwert von einer Flanke gesprochen.

Zunächst wird das Ausgangssignal LUX des zweiten Sensorelementes 3 fortlaufend untersucht, bis eine Änderung erkannt wird, deren Steilheit ein Abdunkeln bzw. Abdecken des Passiv-Infrarot-Bewegungsmelders vermuten lässt. Ab hier läuft die Messzeit für die Flankendauer und die Gesamtlaufzeit. Bis zu dem Zeitpunkt wo weitere Änderungen zu gering werden (vollständige Abdunkelung), werden im Ausgangssignal PIR des ersten Sensorelementes 2 Wendepunkte gesucht und mitgezählt. Liegt ihre Anzahl zu diesem Zeitpunkt zwischen der minimalen und der maximalen Anzahl und ist während dieser Zeit der minimale Hub im Ausgangssignal LUX des zweiten Sensorelementes 3 überschritten worden, wird eine gültige positive Flanke registriert. Anschließend wird auf eine Umkehr der Änderung des Ausgangssignals LUX des zweiten Sensorelementes 3 gewartet, deren Steigung die Rücknahme der Abdeckung bzw. der Abdunkelung vermuten lässt. Zu diesem Zeitpunkt wird geprüft, ob die Dauer der positiven Flanke zwischen der minimalen und der maximalen Dauer liegt. Ist dies nicht der Fall, wird der gesamte Vorgang abgebrochen, sonst wird die Wendepunktsuche in der negativen Flanke und die Messzeit für die negative Flanke gestartet. Die Wendepunktsuche wird fortgesetzt bis die Änderung im Ausgangssignal LUX des zweiten Sensorelements 3 so gering ist, dass angenommen werden kann, dass das Abdecken bzw. Abdunkeln rückgängig gemacht wurde. Anschließend wird geprüft, ob die Anzahl der Wendepunkte zwischen der minimalen und der maximalen Anzahl liegt. In diesem Fall wird ein gültiger Puls (Abdecken bzw. Abdunkeln des Passiv-Infrarot-Bewegungsmelders) registriert, die Registrierung der positive Flanke wird gelöscht und die negative Flanke wird registriert. Ist die verstrichene Gesamtzeit größer als der maximal zulässige Zeitraum, wird der Vorgang abgebrochen, sonst wird geprüft ob die benötigte Anzahl an Pulsen für den Einlernvorgang erreicht ist. Ist dies der Fall wird der Einlernvorgang gestartet, sonst wird erneut eine positive Flanke gesucht.

Ab dem zweiten Abdunkelungsvorgang wird zu Beginn der positiven Flanke die Flankendauer der negativen Flanke auf Einhaltung der Minimal- und Maximaldauer geprüft und bei Nichteinhaltung wird der Vorgang abgebrochen.

Auf die Suche nach Wendepunkten im Ausgangssignal PIR des ersten Sensorelementes 2 kann im Bereich der negativen Flanke des Ausgangssignals LUX des zweiten Sensorelementes 3 verzichtet werden, wenn die Priorität bei der Erkennung eines Einlernvorganges mehr auf Bedienerfreundlichkeit und nicht so sehr auf Erkennungssicherheit ausgelegt ist.

Auf einfache Art und Weise lässt sich somit bei einem solchen Passiv-Infrarot-Bewegungsmelder durch gezieltes Abdunkeln z. B. mittels der Hand des Benutzers ein Einlernvorgang durchführen.

## Patentansprüche

1. Passiv-Infrarot-Bewegungsmelder mit zumindest einem auf einer Leiterplatte (1) angeordneten Infrarotstrahlung erfassenden ersten Sensorelement (2), zumindest einem die Umgebungshelligkeit erfassenden zweiten Sensorelement (3) und einer zur Auswertung der von den beiden Sensorelementen (2, 3) abgegebenen Signale notwendigen, einen Mikrocontroller beinhaltenden Schaltungsanordnung sowie zumindest einem zur Beeinflussung der anzusteuernden Last vorgesehenen Schaltsignalgeber (9), **dadurch gekennzeichnet, dass** auf der Leiterplatte (1) zumindest ein erster Analogdigitalwandler (4) zur Digitalisierung der vom ersten Sensorelement (2) ausgehenden Signale und zumindest ein zweiter Analogdigitalwandler (5) zur Digitalisierung der vom zweiten Sensorelement (3) ausgehenden Signale vorgesehen ist, und dass die digitalisierten Signale des ersten Sensorelementes (2) und des zweiten Sensorelementes (3) jeweils einem auf der Leiterplatte (1) vorhandenen ersten Verknüpfungsmodul (6) und zweiten Verknüpfungsmodul (8) zugeführt werden, wobei das erste Verknüpfungsmodul (6) ausgangsseitig mit einer Lernstufe (7) in Verbindung steht, welche eingangsseitig darüber hinaus mit dem ersten Analogdigitalwandler (4) und dem zweiten Analogdigitalwandler (5) verbunden ist, und dass die Lernstufe (7) ausgangsseitig mit dem zweiten Verknüpfungsmodul (8) in Verbindung steht, welches seinerseits ausgangsseitig mit dem Schaltsignalgeber (9) verbunden ist, und dass das erste Verknüpfungsmodul (6) Mittel zur Erkennung eines Einlernvorganges durch eine abgestimmte Bewertung des entsprechenden Signalverlaufes des vom die Infrarotstrahlung erfassenden ersten Sensorelementes (2) und des entsprechenden Signalverlaufes des vom die Umgebungshelligkeit erfassenden zweiten Sensorelementes (3) enthält, und dass die Lernstufe (7) mit Mitteln zum Einlernen von physikalischen Parametern versehen ist.

2. Passiv-Infrarot-Bewegungsmelder nach Anspruch 1, **dadurch gekennzeichnet, dass** zumindest eines der beiden Verknüpfungsmodul (6, 8) zur automatischen Anpassung zumindest eines Schwellwertes mit einer Schwellwertanpassungsstufe versehen ist.

3. Passiv-Infrarot-Bewegungsmelder nach Anspruch 1 oder 2, **dadurch gekennzeichnet, dass** der Schaltsignalgeber (9) als elektronisches Lastschaltelement ausgeführt ist.

4. Passiv-Infrarot-Bewegungsmelder nach einem der Ansprüche 1 bis 3, **dadurch gekennzeichnet, dass** der erste Analogdigitalwandler (4), der zweite Analogdigitalwandler (5), das erste Verknüpfungsmodul (6) und das zweite Verknüpfungsmodul (8), sowie die Lernstufe (7) durch einen Mikrocontroller realisiert sind.

## Claims

1. Passive infra-red motion detector with at least one first sensor element (2) arranged on a printed circuit board (1) detecting infra-red radiation, at least one second sensor element (3) detecting the ambient luminosity, and a circuit configuration comprising a micro-controller needed for the purpose of evaluating the signals emitted by the two sensor elements (2, 3), as well as at least one signal triggering device (9) provided for the purpose of influencing the load to be actuated, **characterised by** the fact that at least one first analogue-to-digital converter (4) for digitalising the signals transmitted by the second sensor element (3) and at least one second analogue-to-digital converter (5) for digitalising the signals emitted by the first sensor element (2) are provided on the printed circuit board (1), and that the digitalised signals from the first sensor element (2) and from the second sensor element (3) are supplied, respectively, to a first linkage module (6) and a second linkage module (8) provided on the printed circuit board (1), with the first linkage module (6) communicating on the output side with a learning module (7) which is additionally connected on the input side to the first analogue-to-digital converter (4) and the second analogue-to-digital converter (5), and that the learning module (7) communicates on its output side with the second linkage module (8) which, in turn, is connected with its output side to the signal triggering device (9), and that the first linkage module (6) contains means for recognising a teach-in process by way of a coordinated evaluation of the relevant signal shape of the first sensor element (2) sensing the infra-red radiation and of the relevant signal shape of the second sensor element (3) sensing the ambient luminosity, and that the learning module (7) is provided with means for teaching-in physical parameters.

2. Passive infra-red motion detector according to Claim 1, **characterised by** the fact that at least one of the two linkage modules (6, 8) is provided with a threshold value adapter level for the automatic conditioning of at least one threshold value.

3. Passive infra-red motion detector in accordance with Claim 1 or Claim 2, **characterised by** the fact that the signal triggering device (9) is executed as an electronic load switching element.

4. Passive infra-red motion detector in accordance with any of Claims 1 to 3, **characterised by** the fact that the first analogue-to-digital converter (4), the second analogue-to-digital converter (5), the first linkage module (6), and the second linkage module (8), as well as the learning module (7), are realized by means of a micro-controller.

## Revendications

1. Détecteur passif de mouvement à infrarouges avec, au moins, un premier élément à capteur (2) détectant le rayonnement infrarouge et situé sur une plaque à circuit imprimé (1), au moins un deuxième élément à capteur (3) détectant la luminosité ambiante, un circuit contenant un microcontrôleur et nécessaire à l'évaluation des signaux émis par les deux éléments à capteur (2, 3) ainsi que, au moins, un émetteur de signaux de commutation (9) prévu pour influer sur la charge à activer, **caractérisé par le fait qu'**au moins un premier convertisseur analogique-numérique (4) pour la numérisation des signaux émis par le premier élément à capteur (2) et au moins un deuxième convertisseur analogique-numérique (5) pour la numérisation des signaux émis par le deuxième élément à capteur (3) sont prévus sur la plaque à circuit imprimé (1) et **caractérisé** également **par le fait que** les signaux numérisés du premier élément à capteur (2) et du deuxième élément à capteur (3) sont envoyés respectivement à un premier module de liaison (6) et à un deuxième module de liaison (8) mis en place sur la plaque à circuit imprimé (1), le premier module de liaison (6) étant relié du côté de la sortie à un palier d'apprentissage (7) qui, en outre, est connecté du côté de l'entrée au premier convertisseur analogique-numérique (4) et au deuxième convertisseur analogique-numérique (5) ; le système est également **caractérisé par le fait que** le palier d'apprentissage (7) est connecté du côté de la sortie au deuxième module de liaison (8) qui, quant à lui, est relié du côté de la sortie à l'émetteur de signaux de commutation (9), ainsi que **par le fait que** le premier module de liaison (6) comprend un système de détection d'un processus d'apprentissage par évaluation adaptée de l'allure du signal correspondant du premier élément à capteur (2) détectant le rayonnement infrarouge et de l'allure du signal correspondant du deuxième élément à capteur (3) détectant la luminosité ambiante, le palier d'apprentissage (7) étant équipé d'éléments permettant l'apprentissage de paramètres physiques.

2. Détecteur passif de mouvement à infrarouges selon la revendication 1 **caractérisé par le fait qu'**au moins un des deux modules de liaison (6, 8) est équipé d'un palier d'adaptation de valeur seuil pour l'adaptation automatique d'au moins une valeur seuil.

3. Détecteur passif de mouvement à infrarouges selon la revendication 1 ou 2 **caractérisé par le fait que** l'émetteur de signaux de commutation (9) est conçu comme élément électronique de commutation en charge.

4. Détecteur passif de mouvement à infrarouges selon une des revendications 1 à 3 **caractérisé par le fait que** le premier convertisseur analogique-numérique (4), le deuxième convertisseur analogique-numérique (5), le premier module de liaison (6) et le deuxième module de liaison (8) ainsi que le palier d'apprentissage (7) sont réalisés par un microcontrôleur.
